# EUROPEAN PATENT APPLICATION

(11) **EP 4 557 645 A1**
(43) Date of publication of application: **21.05.2025**
(21) Application number: 23851418.6
(22) Date of filing: 28.06.2023
(51) Int. Cl.: H04L 1/00, H04J 3/16

(54) **FAULT CODE BLOCK PROCESSING METHOD AND DEVICE**

(30) Priority: 08.08.2022 CN 202210945854
(71) Applicant: Huawei Technologies Co., Ltd., Shenzhen, Guangdong 518129 (CN)
(72) Inventor: LI, Rixin, Shenzhen, Guangdong 518129 (CN); LIU, Kai, Shenzhen, Guangdong 518129 (CN); QI, Yunlei, Shenzhen, Guangdong 518129 (CN)
(74) Representative: Gill Jennings & Every LLP
(86) International application number: PCT/CN2023/103322
(87) International publication number: WO 2024/032191

(57) **Abstract**

Embodiments of this application disclose an error code block processing method, applied to a first communication apparatus using a FlexE fine granularity technology. The first communication apparatus may obtain a first fgBU, where the first fgBU includes a plurality of first outer code blocks, and the plurality of first outer code blocks include an outer S code block, a plurality of outer D code blocks, and a first outer E code block. The first outer E code block is used to carry data of a first inner code block. After obtaining the first fgBU, the first communication apparatus may restore the first inner code block based on the first fgBU, and set the first inner code block as a first inner E code block. If the first inner code block is not processed, bit error spreading may be caused. Therefore, in embodiments of this application, after obtaining the first fgBU, the first communication apparatus may set the first inner code block corresponding to the first outer E code block as the first inner E code block, to avoid bit error spreading caused by a bit error of the first inner code block.

## Description

This application claims priority to Chinese Patent Application No. 202210945854.1, filed with the China National Intellectual Property Administration on August 8, 2022 and entitled "ERROR CODE BLOCK PROCESSING METHOD AND APPARATUS", which is incorporated herein by reference in its entirety.

### TECHNICAL FIELD

This application relates to the communication field, and in particular, to an error code block processing method and apparatus.

### BACKGROUND

A flexible Ethernet (Flexible Ethernet, FlexE) technology has an advantage of on-demand flexible bandwidth allocation, and can meet requirements in network scenarios such as mobile bearers, home broadband, and dedicated line access. Therefore, the FlexE technology is increasingly widely applied.

The FlexE technology can support a fine-grained service. In an example, a slot (slot) corresponding to a FlexE large bandwidth may be further divided into a plurality of sub-slots (sub-slot), to carry a fine-grained service. A service carried in the slot corresponding to the FlexE large bandwidth may also be referred to as a coarse-grained service, and the fine-grained service may also be referred to as a small-grained service. In the following descriptions, "small-grained" and "fine-grained" may be used alternately.

Currently, a transmission error may occur in a process of transmitting a small-grained service. In this case, how to process a small-grained service in which a transmission error occurs is a problem to be resolved currently.

### SUMMARY

Embodiments of this application provide an error code block processing method and apparatus, to avoid bit error spreading occurring when an error occurs in a transmission process of a small-grained service. In an example, bit error spreading may be understood as that a quantity of identified error code blocks is greater than an actual quantity of error code blocks. For example, three code blocks actually encounter bit errors, but during code block analysis, all code blocks are identified as error code blocks. In another example, bit error spreading may be understood as that, when an Ethernet frame is restored based on an error code block, a cyclic redundancy check (cyclic redundancy check, CRC), for example, CRC 32, of the Ethernet frame is escaped, and consequently the error code block is spread to a service layer or even an application layer.

According to a first aspect, an embodiment of this application provides an error code block processing method. The method may be applied to a first communication apparatus using a FlexE fine granularity technology. In an example, the first communication apparatus may obtain a first fine granularity basic unit (finer granularity basic unit, fgBU), where the first fgBU includes a plurality of first outer code blocks, and the plurality of first outer code blocks include an outer start (start, S) code block, a plurality of outer data (data, D) code blocks, and a first outer error (error, E) code block. The first outer E code block is used to carry data of a first inner code block. After obtaining the first fgBU, the first communication apparatus may restore the first inner code block based on the first fgBU, and set the first inner code block a first inner E code block. In this embodiment of this application, if the first inner code block is not processed, bit error spreading may be caused. For example, when error correction cannot be performed by using an error correction algorithm, the entire first fgBU may be identified as an E code block. Therefore, in this embodiment of this application, after obtaining the first fgBU, the first communication apparatus may set the first inner code block corresponding to the first outer E code block as the first inner E code block, to avoid bit error spreading caused by a bit error of the first inner code block.

In a possible implementation, the inner code block may include an S code block, a D code block, and a T code block, and may further include an idle (idle, I) code block and/or an O code block. Therefore, the first inner code block may be any one of an S code block, a D code block, a T code block, an idle I code block, and an O code block.

In a possible implementation, the first communication apparatus is a fine-grained service switching node. In an example, an outbound interface of the first communication apparatus may set the first inner code block as the first inner E code block.

In a possible implementation, the first inner code block may correspond to a first sub-slot, and the first sub-slot may correspond to a plurality of inner code blocks. In this case, if an error occurs in the first inner code block, an error also occurs in overall data carried in the first sub-slot. In this case, in an example, during specific implementation of "setting the first inner code block as the first inner E code block", the plurality of inner code blocks corresponding to the first sub-slot may be all set as inner E code blocks. For example, the first inner code block and several inner code blocks adjacent to the first inner code block in the plurality of inner code blocks corresponding to the first sub-slot may be set as inner E code blocks. For another example, all code blocks corresponding to the first sub-slot may be set as E code blocks. In this manner, bit error spreading caused by a bit error of the first inner code block can be avoided.

In a possible implementation, if both a D code block and a T code block included in a code block stream change into E code blocks because an error occurs in a transmission process of the code block stream, the first outer E code block may be a first outer D code block in which an error occurs, or may be a first outer T code block in which an error occurs.

In a possible implementation, the first communication apparatus may be a fine-grained service switching node. In this case, in an example, after setting the first inner code block as the first inner E code block, the first communication apparatus may send the first inner E code block to a second communication apparatus. In an example, the first communication apparatus may send the code block stream including the first inner E code block to the second communication apparatus. The code block stream including the first inner E code block may be a code block stream obtained after secondary encoding. In this case, the first communication apparatus may send the first inner E code block to the second communication apparatus, instead of sending a first inner code block in which an error occurs to the second communication apparatus. Correspondingly, in an example, if the second communication apparatus is a fine-grained service sink node, after the second communication apparatus receives the first inner E code block, the second communication apparatus may discard, for example, the first inner E code block, so as to prevent the second communication apparatus from restoring an Ethernet frame based on the first inner code block in which an error occurs, thereby avoiding bit error spreading.

In a possible implementation, the first communication apparatus may be a fine-grained service sink node. In this case, in an example, after setting the first inner code block as the first inner E code block, the first communication apparatus may send the first inner E code block to an Ethernet frame client signal restoration module of the first communication apparatus, so that the Ethernet frame client signal restoration module performs data restoration to obtain an Ethernet frame corresponding to each client. Because the first inner code block is set as the first inner E code block, when restoring the Ethernet frame, the Ethernet frame client signal restoration module may discard the first inner E code block, instead of processing the first inner E code block as a normal code block. Therefore, bit error spreading can be avoided.

In a possible implementation, the first outer E code block may further carry a second inner code block in addition to the first inner code block. In this case, the first communication apparatus may further restore the second inner code block based on the first fgBU, and set the second inner code block as a second inner E code block, to avoid bit error spreading caused by a bit error of the second inner code block.

In a possible implementation, the first communication apparatus is a fine-grained service switching node. In this case, after setting the second inner code block as the second inner E code block, the first communication apparatus may further send the second inner E code block to the second communication apparatus. For example, the first communication apparatus may send the first inner E code block and the second inner E code block to the second communication apparatus. In an example, if the second communication apparatus is a fine-grained service sink node, after the second communication apparatus receives the first inner E code block and the second inner E code block, the second communication apparatus may discard, for example, the first inner E code block and the second inner E code block, to prevent the second communication apparatus from restoring an Ethernet frame based on a first inner code block in which an error occurs and a second inner code block in which an error occurs, thereby avoiding bit error spreading.

In a possible implementation, the first communication apparatus is a fine-grained service sink node. In this case, after setting the second inner code block as a second inner E code block, the first communication apparatus may further send the second inner E code block to an Ethernet frame client signal restoration module of the first communication apparatus. For example, the first communication apparatus may send the first inner E code block and the second inner E code block to the Ethernet frame client signal restoration module. When restoring the Ethernet frame, the Ethernet frame client signal restoration module may discard the first inner E code block and the second inner E code block, instead of processing the first inner E code block and the second inner E code block as normal code blocks. Therefore, bit error spreading can be avoided.

In a possible implementation, the plurality of first outer code blocks further include a second outer E code block, the second outer E code block is a second outer D code block in which an error occurs, and the second outer E code block is used to carry data of a third inner code block. The method further includes: restoring the third inner code block based on the first fgBU, and setting the third inner code block as a third inner E code block.

In a possible implementation, the method further includes: obtaining a second fgBU, where the second fgBU includes a plurality of second outer code blocks, the plurality of second outer code blocks include an outer S code block, a plurality of outer D code blocks, and a fourth outer E code block, and the fourth outer E code block is used to carry data of a fourth inner code block; and restoring the fourth inner code block based on the second fgBU, and setting the fourth inner code block to a fourth inner E code block.

According to a second aspect, an embodiment of this application provides an error code block processing apparatus, used in a first communication apparatus using a flexible Ethernet FlexE fine granularity technology, where the error code block processing apparatus includes a transceiver unit and a processing unit. The transceiver unit is configured to perform a receiving-related operation and/or a sending-related operation performed by the first communication apparatus in the first aspect and the possible implementations of the first aspect. The processing unit is configured to perform an operation other than the receiving-related operation and/or the sending-related operation performed by the first communication apparatus in the first aspect and the possible implementations of the first aspect. In specific implementation, the transceiver unit may include a receiving unit and/or a sending unit. The receiving unit is configured to perform the receiving-related operation, and the sending unit is configured to perform the sending-related operation.

In a specific example, the first communication apparatus may include the receiving unit and the processing unit. The receiving unit is configured to obtain a first fine granularity basic unit fgBU, where the first fgBU includes a plurality of first outer code blocks, the plurality of first outer code blocks include an outer start S code block, a plurality of outer data D code blocks, and a first outer error E code block, and the first outer E code block is used to carry data of a first inner code block. The processing unit is configured to: restore the first inner code block based on the first fgBU; and set the first inner code block as a first inner E code block.

In a possible implementation, the first inner code block corresponds to a first sub-slot, and the setting the first inner code block as a first inner E code block includes: setting a plurality of inner code blocks corresponding to the first sub-slot as inner E code blocks, where the plurality of inner code blocks include the first inner code block.

In a possible implementation, the plurality of first outer code blocks further include a termination T code block, and the first outer E code block is a first outer D code block in which an error occurs.

In a possible implementation, the first outer E code block is a T code block in which an error occurs.

In a possible implementation, the first communication apparatus is a fine-grained service switching node, and the apparatus further includes: a sending unit, configured to send the first inner E code block to a second communication apparatus.

In a possible implementation, the first communication apparatus is a fine-grained service sink node, and the apparatus further includes: a sending unit, configured to send the first inner E code block to an Ethernet frame client signal restoration module of the first communication apparatus.

In a possible implementation, the first outer E code block is further used to carry data of a second inner code block, and the processing unit is further configured to: restore the second inner code block based on the first fgBU, and set the second inner code block as a second inner E code block.

In a possible implementation, the first communication apparatus is the fine-grained service switching node, and the sending unit included in the apparatus is further configured to send the second inner E code block to the second communication apparatus.

In a possible implementation, the first communication apparatus is the fine-grained service sink node, and the sending unit included in the apparatus is further configured to send the second inner E code block to the Ethernet frame client signal restoration module of the first communication apparatus.

In a possible implementation, the plurality of first outer code blocks further include a second outer E code block, the second outer E code block is a second outer D code block in which an error occurs, and the second outer E code block is used to carry data of a third inner code block. The processing unit is further configured to: restore the third inner code block based on the first fgBU, and set the third inner code block as a third inner E code block

In a possible implementation, the receiving unit is further configured to obtain a second fgBU, where the second fgBU includes a plurality of second outer code blocks, the plurality of second outer code blocks include an outer S code block, a plurality of outer D code blocks, and a fourth outer E code block, and the fourth outer E code block is used to carry data of a fourth inner code block. The processing unit is further configured to: restore the fourth inner code block based on the second fgBU, and set the fourth inner code block to a fourth inner E code block.

In a possible implementation, the first inner code block includes any one of the following types of code blocks: an S code block, a D code block, a T code block, an idle I code block, or an O code block.

In a possible implementation, the first communication apparatus is the fine-grained service switching node, and the setting the first inner code block as a first inner E code block includes: An outbound interface of the first communication apparatus sets the first inner code block as the first inner E code block.

According to a third aspect, this application provides an error code block processing apparatus. The error code block processing apparatus includes a memory and a processor, the memory is configured to store program code, and the processor is configured to run instructions in the program code, so that the communication apparatus performs the method according to any one of the first aspect or the implementations of the first aspect.

According to a fourth aspect, this application provides an error code block processing apparatus. The error code block processing apparatus includes a communication interface and a processor. In a specific implementation, the communication interface is configured to perform a receiving/sending operation performed by the first communication apparatus according to any one of the first aspect or the implementations of the first aspect, and the processor is configured to perform an operation other than the receiving/sending operation performed by the first communication apparatus according to any one of the first aspect or the implementations of the first aspect.

According to a fifth aspect, an embodiment of this application provides a computer-readable storage medium, including instructions or a computer program. When the instructions or the computer program is run on a processor, the method any one of the first aspect or the implementations of the first aspect is performed.

According to a sixth aspect, an embodiment of this application provides a computer program product, including the computer program product. When the computer program product runs on a processor, the method according to any one of the first aspect or the implementations of the first aspect is performed.

### BRIEF DESCRIPTION OF DRAWINGS

To describe technical solutions in embodiments of this application or the conventional technology more clearly, the following briefly describes the accompanying drawings for describing embodiments or the conventional technology. It is clear that, the accompanying drawings in the following descriptions show only some embodiments recorded in this application, and a person of ordinary skill in the art may still derive other drawings from these accompanying drawings without creative efforts.
FIG. 1a is a diagram of an SPN architecture supporting a small granularity technology according to an embodiment of this application;
FIG. 1b is a diagram of a network architecture according to an embodiment of this application;
FIG. 1c is a diagram of a process of encoding a MAC frame according to an embodiment of this application;
FIG. 1d is a diagram of an outer code block and an inner code block according to an embodiment of this application;
FIG. 1e is a diagram of an example application scenario according to an embodiment of this application;
FIG. 2 is a schematic flowchart of an error code block processing method according to an embodiment of this application;
FIG. 3 is a diagram of a structure of an error code block processing apparatus according to an embodiment of this application;
FIG. 4 is a diagram of a structure of a communication apparatus according to an embodiment of this application; and
FIG. 5 is a diagram of a structure of a communication apparatus according to an embodiment of this application.

### DESCRIPTION OF EMBODIMENTS

Embodiments of this application provide an error code block processing method and apparatus, to avoid bit error spreading occurring when an error occurs in a transmission process of a small-grained service.

For ease of understanding, related content of FlexE is first described.

FlexE group: Each FlexE group includes one or more PHYs. When a plurality of PHYs are included, the plurality of PHYs are physically independent. A network device using a FlexE technology may identify PHYs included in one FlexE group by using numbers of the PHYs, to implement logical bundling of a plurality of PHYs. For example, a number of each PHY may be identified by using a number ranging from 1 to 254, and 0 and 255 are reserved numbers. A number of a PHY may correspond to an interface on the network device. Two adjacent network devices need to identify a same PHY by using a same number. The numbers of the PHYs included in the FlexE group do not need to be consecutive. Usually, there is one FlexE group between two network devices. However, this application does not limit that there is only one FlexE group between two network devices. In other words, there may be a plurality of FlexE groups between two network devices. One PHY may be used to carry at least one client, and one client may be transmitted on at least one PHY. FlexE may support mapping and transmission of any quantity of different FlexE clients on any group of PHYs, to implement PHY bundling, channelization, sub-rating, and other functions.

FlexE client: The FlexE client corresponds to various user interfaces or bandwidths on a network. The FlexE client represents a client data stream transmitted in a specified slot (one or more slots) in a FlexE group. One FlexE group may carry a plurality of FlexE clients, and one FlexE client may correspond to one or more user service data streams (which may also be referred to as MAC clients). The FlexE client may be flexibly configured based on a bandwidth requirement, to support Ethernet media access control (media access control, MAC) data streams at various rates (for example, 10G, 40G, and n*25G data streams, or even non-standard rate data streams), for example, transmit the data streams to a FlexE shim layer through 64B/66B encoding. Clients sent by using a same FlexE group need to share a same clock, and these clients need to adapt to allocated slot rates. In this application, a FlexE client (which may also be referred to as a FlexE client interface) may be used to transmit a corresponding service data stream of the FlexE client. The FlexE client interface is a logical interface. Each FlexE interface may be logically divided into one or more FlexE client interfaces, each FlexE interface may be divided into a plurality of slots in time domain, and each FlexE client interface occupies at least one of the plurality of slots. 64/66B means that a data code block includes 66 bits, the first two bits of the 66 bits are synchronization bits, and the last 64 bits are data bits. At a PCS layer, 64/66B may be extracted by using the first two synchronization bits.

FlexE shim: The FlexE shim is an additional logical layer between a MAC layer and a PHY layer (PCS sublayer) that is inserted into a conventional Ethernet architecture, and is a core architecture for implementing a FlexE technology based on a slot distribution mechanism. For a transmit end, a main function of the FlexE shim is to encapsulate data into a slot (slot) obtained through pre-division. Then, each slot obtained through division is mapped to a PHY in a FlexE group for transmission based on a FlexE slot table. Each slot is mapped to one PHY in the FlexE group. A 100GE PHY is used as an example. The FlexE shim layer may divide each 100GE PHY in the FlexE group into data bearer channels of 20 slots (slot), and a bandwidth corresponding to each slot is 5 Gbps. Each time the PHY sends 64/66B data of 1023*20 slots, a FlexE overhead (Overhead, OH) is inserted, to notify a receive end of a method for parsing the received data.

Small-grained service: In some embodiments, a slot corresponding to a large bandwidth may be further divided into a plurality of sub-slots (sub-slots), to carry a client service that has a relatively low bandwidth requirement. The foregoing service is also referred to as a small-grained service. For example, the foregoing large bandwidth may be understood as a bandwidth corresponding to a service layer of the small-grained service. For example, when the service layer of the small-grained service is an MTN path layer, a bandwidth of the MTN path layer is 5 Gbps, and a slot corresponding to a large bandwidth of 5 Gbps is further divided into 480 sub-slots according to a granularity of 10 Mbps. The 480 sub-slots are used to carry the small-grained service. For example, the 1^{st} sub-slot, the 3^{rd} sub-slot, and the 5^{th} sub-slot in the 480 sub-slots are used to carry a small-grained service 1. For another example, when the service layer of the small-grained service is a 10GE Ethernet physical layer, a corresponding large bandwidth is further divided into a plurality of sub-slots according to a finer granularity, to carry the small-grained service. It can be learned that a small-grained bandwidth has a finer granularity, and the small-grained service is a service that has a relatively low bandwidth requirement. For example, a bandwidth requirement of a power private line service is 10 Mbps. In this case, a small granularity technology may be used to allocate a specified bandwidth to the power private line service, to carry service traffic of the power private line service. The power private line service is a small-grained service.

When the small-grained service is transmitted, for a transmit end, in an example, the FlexE shim may encapsulate, based on a small-grained slot configuration, data into a sub-slot obtained through pre-division for transmission. For a receive end, the FlexE shim may restore, based on a small-grained slot configuration, data received by using a corresponding slot whose bandwidth is 5 Gbps into original small-grained service data for continuing transmission. In another example, for a transmit end, data may be encapsulated into a corresponding sub-slot for transmission by using an MTN path adaptation function (MTN path adaptation function). For a receive end, data received by using a corresponding slot whose bandwidth is 5 Gbps may be restored to original small-grained service data for continuing transmission by using the MTN path adaptation function. In an example, the small-grained service data may be carried in a fine granularity unit (fine granularity unit, FGU) base frame. In an example, the fine granularity unit may also be referred to as a fine granularity basic unit (fine granularity basic unit, fgBU). In the following descriptions, the two may be used alternately.

For a specific implementation of a FlexE OH insertion manner and a structure of an overhead frame, refer to a related FlexE description part of the Electrical and Optical Internetworking Forum (optical internetworking forum, OIF). Details are not described herein.

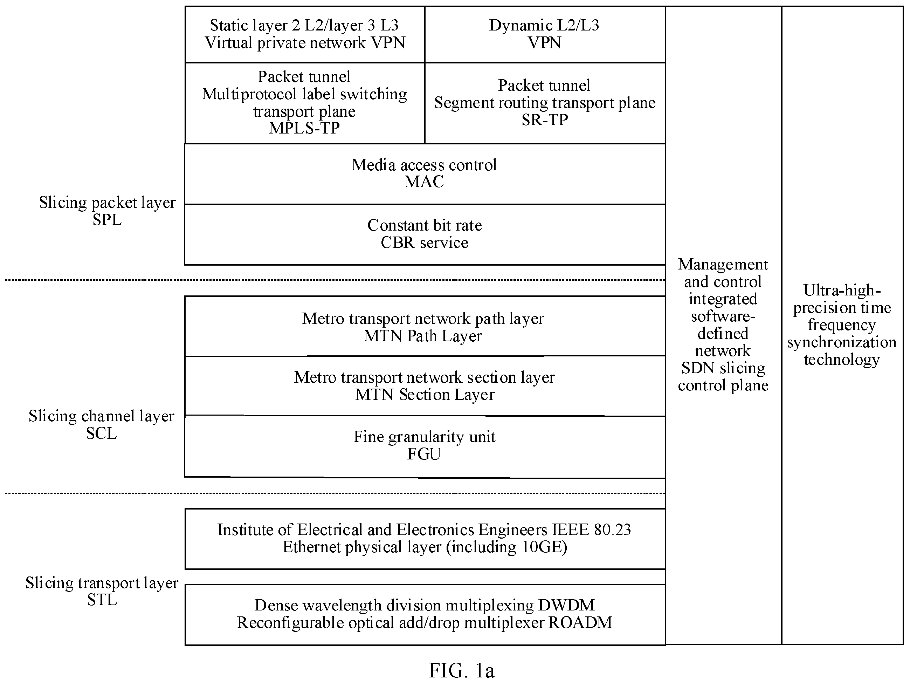

The following describes a possible slicing packet network (Slicing Packet Network, SPN) architecture supporting a small granularity technology. FIG. 1a is a diagram of an SPN architecture supporting a small granularity technology according to an embodiment of this application.

As shown in FIG. 1a, the SPN architecture includes:
a slicing packet layer (slicing packet layer, SPL), a slicing channel layer (slicing channel layer, SCL), a slicing transport layer (slicing transport layer, STL), a management and control integrated software-defined network (software-defined network, SDN) slicing control plane, and an ultra-high-precision event frequency synchronization technology.

The SCL includes an FGU layer, an MTN path (MTN path, MTNP) layer, and an MTN section (MTN Section, MTNS) layer. The FGU layer provides an end-to-end deterministic low-latency hard slicing path of a granularity of N*10 Mbps for a small-grained service. The FGU layer is an independent sublayer, and may be flexibly carried on an MTN path layer or an Ethernet physical layer as required. In other words, a service layer of the FGU layer may be the MTN path layer or the Ethernet physical layer.

On the basis of an original high-speed Ethernet physical layer interface, a 10GE Ethernet physical layer interface is newly added at the STL. The 10GE Ethernet physical layer can be used in a customer-premises equipment (customer-premises equipment, CPE) scenario, and directly carries the FGU layer.

The following describes the MTNS and the MTNP from a perspective of a transmit-side behavior and a receive-side behavior by using an example in which the MTN path layer carries a small-grained service.

A transmit-side behavior and a receive-side behavior of the MTNS are first described.

In an example, a 100GBASE-R PHY is used as an example. The MTNS provides a point-to-point connection, is responsible for performing slot processing on adjacent nodes connected by using an Ethernet PHY, and provides functions of bundling, sub-rating, and channelization. The MTNS is bidirectionally symmetric, and one data transmission direction is used as an example for description herein.

On a transmit side, the MTNS inserts a special O code block into a 66B code block sequence, inserts one D code block at an interval of 1023*20 66B code blocks, and inserts one D code block at an interval of 1023*20 66B code blocks. A total of seven D code blocks need to be inserted. After the 7^{th} D code block is inserted, a special O code block is inserted at an interval of 1023*20 code blocks. In this way, a total of 8*(1023*20+1) code blocks form an MTNS frame (frame).

The O code block and the foregoing seven D code blocks constitute an overhead of the MTNS frame. The overhead carries some point-to-point link configuration information that indicates the MTNS, for example, slot configuration information and section layer group configuration information.

The MTNS continuously sends data to a receive end according to the foregoing frame structure. A continuous MTNS frame is equivalent to a 66B code block stream, is converted into a bit, an optical signal, or another analog signal such as an electrical pulse according to the lower PHY layer protocol defined in the Institute of Electrical and Electronics Engineers (Institute of Electrical and Electronics Engineers, IEEE) 802.3, and is sent by a transmit-side device.

According to the Ethernet low PHY layer (Ethernet lower PHY layer) protocol, a receive side first locks a received signal (for example, a bit, an optical signal, or another analog signal such as an electrical pulse) as a frame header of the MTNS frame by identifying an O code block. According to a fixed count, it may be learned that a next overhead code block appears after 1023*20 code blocks. Correspondingly, the receive side may determine a location of data corresponding to each slot in the received signal based on the O code block.

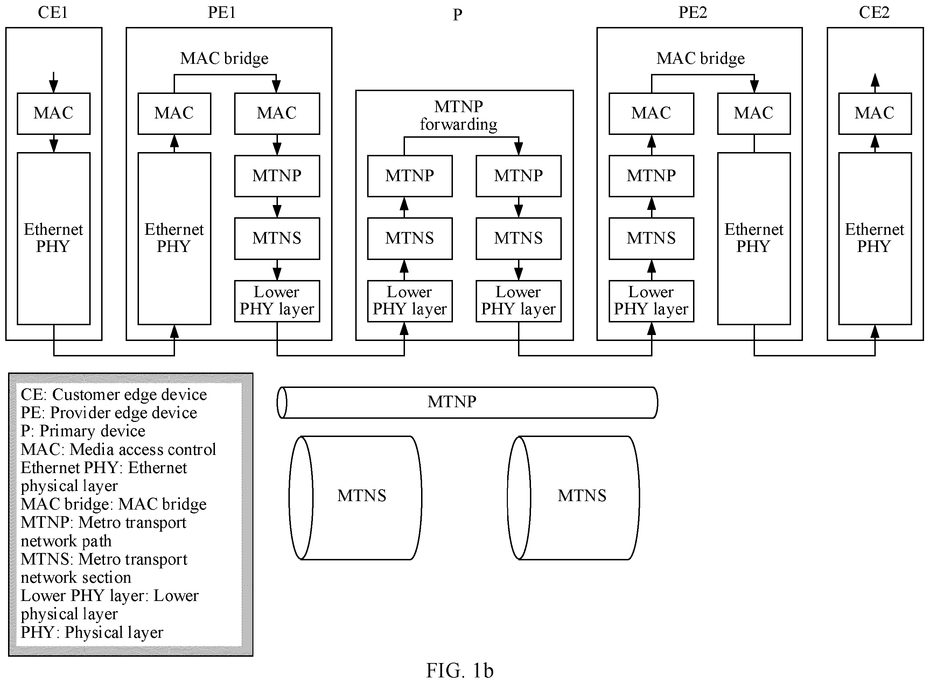

The MTNS can provide only a point-to-point connection. The MTNP is responsible for providing an "end-to-end path connection" from a network ingress to a network egress. The MTNP provides an end-to-end rigid hard pipe connection and an operations, administration, and maintenance and protection (OAM and protection, OAMP) function. For typical networking of the MTNP, refer to FIG. 1b. FIG. 1b is a diagram of a network architecture according to an embodiment of this application.

The following describes a transmit-side behavior and a receive-side behavior of the MTNP with reference to FIG. 1b.

As shown in FIG. 1b, an end-to-end MTNP is included between a provider edge (provider edge, PE) 1 and a PE 2, and a point-to-point MTNS is included between the PE 1 and the PE 2.

On a network side interface (network-to-network interface, NNI) side of the PE1, an MTNP layer obtains a client signal from a MAC layer, where the client signal may be a MAC frame. MAC mentioned herein may be a processing module at the MAC layer. After obtaining the MAC frame, the MTNP layer encodes the MAC frame into a 64/66B code block sequence. Specifically, each MAC frame is encoded into a 66B code block sequence defined by a start code block (S code block) and a termination code block (that is, a T code block), and a MAC frame sequence is encoded into a 66B code block sequence.

In an example, if there is no valid MAC frame to be sent, the MTNP fills the 66B code block with I code blocks, to ensure that data is sent in a hard pipe of the MTNP at all times.

A receive side of a P node first identifies an MTNS frame according to the foregoing receive-side behavior of the MTNS, and then restores MTNP data from a specified MTNS slot according to a preconfiguration. Next, the P node performs MTNP forwarding. It should be noted herein that an essential difference between MTNP forwarding and IP forwarding and MAC bridge forwarding lies in that: MTNP forwarding exclusively occupies a device forwarding resource, and does not support statistical multiplexing, and an ingress and an egress of a network node (for example, the P node) need to be configured with a same quantity of MTNS slots.

As described above, in some embodiments, a slot corresponding to a large bandwidth may be further divided into a plurality of sub-slots, to carry a small-grained service. For example, a slot corresponding to a bandwidth of 5 Gbps is further divided into 480 sub-slots according to a granularity of 10 Mbps. The 480 sub-slots are used to carry the small-grained service. In this case, an MTN FGU may further divide a 5-Gbps MTNP into 480 10-Mbps slots in a hierarchical manner. In this scenario, the MTNP and the MTN FGU can be decoupled. In this case, the MTNP is used as a service layer of the MTN FGU. In an example, the fg-BU may include an FGU base frame overhead and an FGU base frame payload. The FGU base frame overhead may be used to carry small-grained slot information, and the FGU base frame payload is used to carry small-grained service data. The small-grained slot information may be a mapping relationship between a sub-slot and a sub-client. The sub-client is similar to a FlexE client, and also corresponds to various user interfaces or bandwidths of a network. A difference between the sub-client and the FlexE client lies in that the sub-client represents a client data stream transmitted in the sub-slot, and one sub-client may correspond to one or more sub-slots.

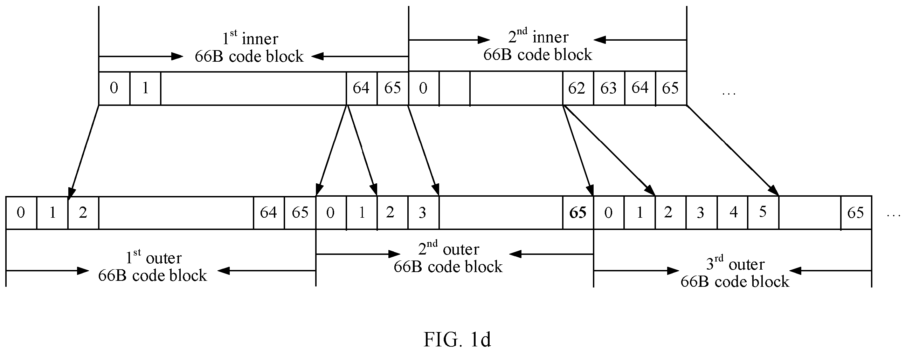

In a scenario in which a slot corresponding to a bandwidth of 5 Gbps is further divided based on a granularity of 10 Mbps, in an example, one FGU base frame may include 24 sub-slots, each sub-slot includes 65 bytes, and each sub-slot may carry eight 65-bit code blocks. In other words, the base frame payload 120 may include 1560 (65*24) bytes. 20 FGU base frames form a multi-frame, which provides 480 (24*20) sub-slots. In an example, after 64/66B encoding is performed on the fg-BU shown in FIG. 1d, one S0 code block, 196 D code blocks, and one T code block may be obtained.

For an NNI transmit side of the PE 1, similar to the MTNP, the MTN FGU layer first encodes a client signal of the MAC frame into a 66B code block sequence, and then inserts an OAM code block. In this case, it should be noted that an OAM code block of a fine granularity MTNP (fgMTNP) instead of an OAM code block of the MTNP is inserted into the MTN FGU layer. Subsequently, a 66B code block sequence including the OAM code block of the fgMTNP is mapped to a 10-Mbps slot specified in the fg-BU according to a preconfiguration.

The fgBU sequence is actually a string of 66B code blocks, and may be equivalent to a client signal of the MTNP. After the OAM code block of the MTNP is inserted, the fgBU sequence is mapped to a slot specified by the MTNS, according to the foregoing transmit-side behavior of the MTNS.

The receive side of the P node restores an MTNP signal according to the foregoing receive-side behavior of the MTNP, and then extracts the OAM code block of the MTNP. After restoring the MTNP signal, the receive side of the P node may complete framing of the fg-BU by searching for an S code block.

The P node performs fgMTNP forwarding. Similar to MTNP forwarding, fgMTNP forwarding is TDM forwarding, which exclusively occupies a device forwarding resource, and does not support statistical multiplexing. The P node does not terminate the OAM code block of the fgMTNP.

The transmit-side behavior of the P node is an inverse process of the receive-side behavior of the P node, which is not described in detail herein. In addition, a receive-side behavior of a PE2 node is an inverse process of a transmit-side behavior of a PE1 node, which is not described in detail herein.

According to the foregoing transmit-side behavior and receive-side behavior of each of the MTNS and the MTNP, it can be learned that:

To enable a small-grained signal to pass through a device deployed with a large-grained technology in a "zero perception" manner, encoding each MAC frame into a 64/66B code block sequence may include two times of encoding. First encoding is to convert the MAC frame into a 66B code block sequence. For a specific conversion manner, refer to the clause (clause) 81 and the clause 82 in the IEEE 802.3. Details are not described herein. Second encoding is to sequentially fill 66B code blocks corresponding to a plurality of pieces of small-grained data into a data payload part of a D code block of the fgBU and a data payload part of a T code block of the fgBU.

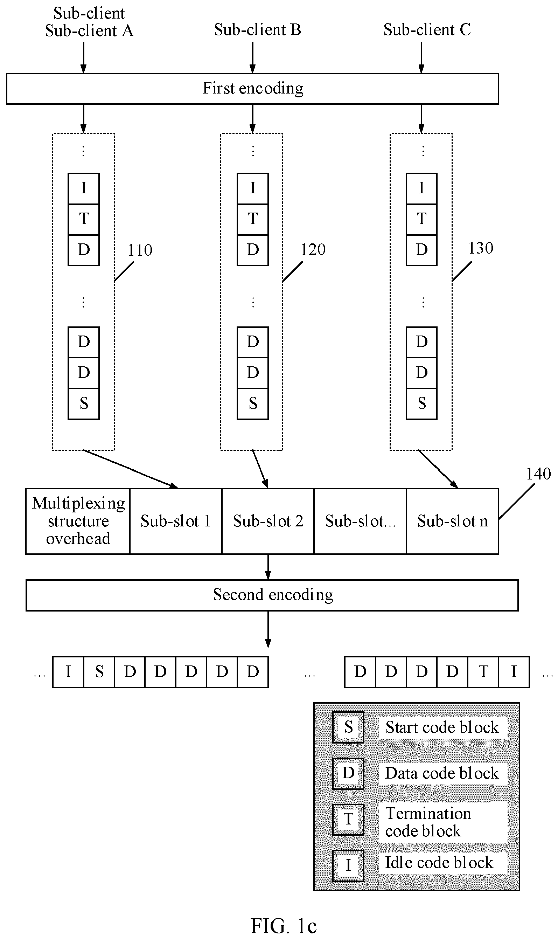

This may be understood with reference to FIG. 1c. FIG. 1c is a diagram of a process of encoding a MAC frame according to an embodiment of this application.

As shown in FIG. 1c, after an Ethernet frame corresponding to a sub-client A is encoded for the first time, a corresponding 64/66B code block sequence 110 is obtained. Similarly, after an Ethernet frame corresponding to a sub-client B is encoded for the first time, a corresponding 64/66B code block sequence 120 may also be obtained, and after an Ethernet frame corresponding to a sub-client C is encoded for the first time, a corresponding 64/66B code block sequence 130 may also be obtained.

Then, a multiplexing structure 140 including the code block sequence 110, the code block sequence 120, the code block sequence 130, and a multiplexing structure overhead is obtained based on a small-grained slot configuration, the code block sequence 110, the code block sequence 120, and the code block sequence 130. The multiplexing structure includes a plurality of sub-slots, and the code block sequence 110, the code block sequence 120, and the code block sequence 130 are filled into corresponding sub-slots in the multiplexing structure 140 based on the small-grained slot configuration.

Further, secondary encoding is performed on the multiplexing structure 140, and all pieces of bit data included in the multiplexing structure are sequentially filled into 64 bits used as non-synchronization header bits in a 64/66B code block corresponding to the secondary encoding, to obtain a code block stream obtained after the secondary encoding. The "64 bits used as the non-synchronization header bits in the 64/66B code block corresponding to the secondary encoding" may also be referred to as a "data payload part", and the two may be used alternately.

As shown in FIG. 1c, the code block stream obtained after the secondary encoding includes an I code block, an S code block, a D code block, and a T code block. The I code block is used to adapt to a rate difference between different Ethernet interfaces. For the I code block, refer to a related description part in the IEEE 802.3. Details are not described herein.

In addition, although not shown in FIG. 1c, the code block sequence 110, the code block sequence 120, and the code block sequence 130 obtained after the first encoding may further include an O code block in addition to an I code block, an S code block, a D code block, and a T code block.

For ease of description, in the following descriptions, a 66B code block obtained after the first encoding may be referred to as an "inner code block", and a 66B code block obtained after the second encoding may be referred to as an "outer code block".

In an example, the outer code block may include at least one fgBU. The fgBU mentioned in embodiments of this application may be an SPN fgBU defined in the China Mobile enterprise standard, or may be an MTN fgBU defined in the international telecommunication union (international telecommunication union, ITU).

Because 66 bits of data of an inner code block need to be filled into 64 bits of an outer code block, data of one inner code block needs to be carried by using two outer code blocks. For example, the first 64 bits of data of an inner code block 1 are carried by using 64 bits of an outer code block 1, and the last 2 bits of data of the inner code block may be carried by using two bits of an outer code block 2. In addition, the other 62 bits that can be used to carry data in the outer code block 2 may be used to carry 62 bits of data of the inner code block 2.

This may be understood with reference to FIG. 1d. FIG. 1d is a diagram of an outer code block and an inner code block according to an embodiment of this application. As shown in FIG. 1d, the first 64 bits of the 1^{st} inner 66 code block are carried by using the 2^{nd} bit to the 63^{rd} bit of the 1^{st} outer code block, the last two bits of the 1^{st} inner 66B code block are carried by using the 2^{nd} bit and the 3^{rd} bit of the 2^{nd} outer code block, the first 62 bits of the 2^{nd} inner 66B code block are carried by using the 4^{th} bit to the 65^{th} bit of the 2^{nd} outer code block, and the last 4 bits of the 2^{nd} inner 66B code block are carried by using the 2^{nd} bit to the 5^{th} bit of the 3^{rd} outer code block, and so on.

For other content in the SPN architecture shown in FIG. 1a, refer to related description in the SPN small-grained white paper of China Mobile. Details are not described herein.

Although the MAC frame is encoded in the 64/66B encoding manner in the foregoing descriptions, the foregoing descriptions are merely shown as a possible implementation, and an encoding technology used for encoding the MAC frame is not limited to the foregoing 64/65B encoding manner. For example, the MAC frame may be encoded in a 64/65B encoding manner. For another example, the MAC frame may be encoded in a 256/257B encoding manner. Details are not described herein.

For ease of description, in the following embodiments, the 64/66B encoding manner is used as an example for description.

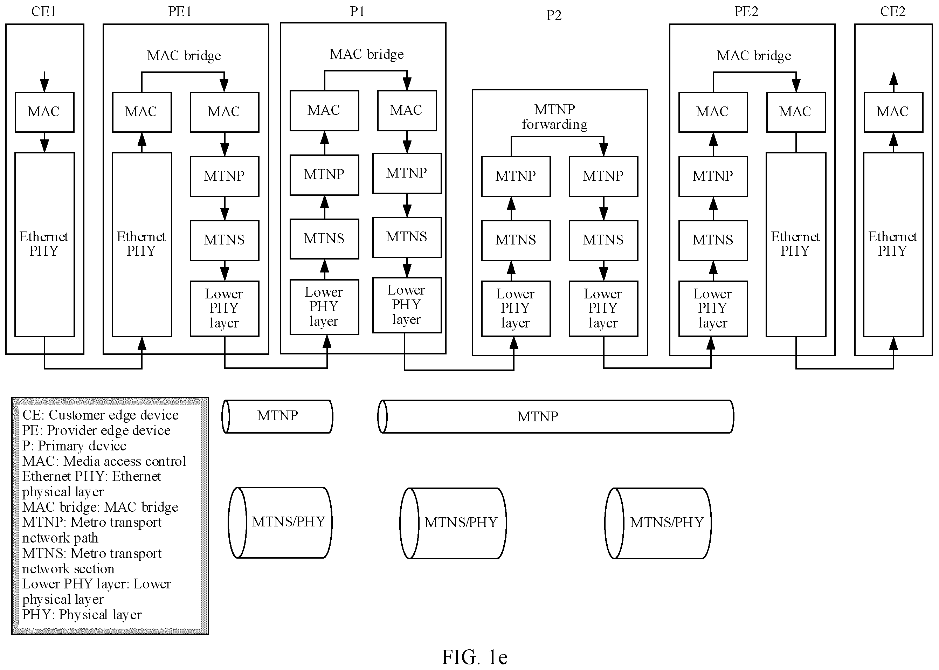

The following describes an application scenario of an embodiment of this application with reference to FIG. 1e. FIG. 1e is a diagram of an example application scenario according to an embodiment of this application.

As shown in FIG. 1e, an end-to-end transmission path is established between a PE 1 and a PE 2 to carry a small-grained service. A device P1 and a device P2 are further included between the PE 1 and the PE 2. Although not shown in FIG. 1e, another device may also be included between the PE 1 and the device P1. Correspondingly, another device may also be included between the device P1 and the device P2 or between the device P2 and the device PE2.

Currently, a transmission error may occur in a transmission process of a small-grained service. In an example, a transmission error may occur in an fgBU. For example, a D code block, an I code block, an O code block, and a T code block in the fgBU may all change into E code blocks. If processing is not performed when an outer code block is an E code block, bit error spreading may be caused, and normal transmission of a small-grained service is affected.

In view of this, embodiments of this application provide an error code block processing method and apparatus, to avoid bit error spreading.

The following describes the method with reference to the accompanying drawings.

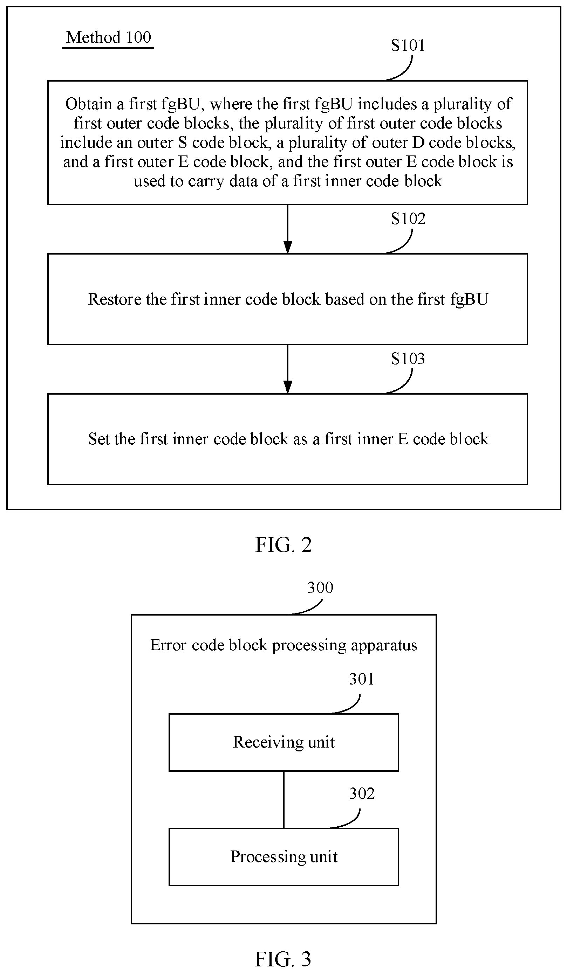

FIG. 2 is a schematic flowchart of an error code block processing method according to an embodiment of this application. The error code block processing method shown in FIG. 2 may be performed by a first communication apparatus using a FlexE fine granularity technology. The first communication apparatus may be a fine-grained service switching node. The fine-grained service switching node is an intermediate node that has a fine-grained service parsing function. For example, the fine-grained service switching node may be P1 shown in FIG. 1e. The first communication apparatus may alternatively be a fine-grained service sink node. The fine-grained service sink node may be a tail node that receives a fine-grained service packet. For example, the fine-grained service sink node may be PE2 shown in FIG. 1e.

In an example, the method 100 may be performed by an inbound interface of the first communication apparatus. In another example, the method 100 may be performed by an outbound interface of the first communication apparatus. In still another example, some steps of the method 100 may be performed by the inbound interface, and some steps may be performed by the outbound interface. This is not specifically limited in this embodiment of this application.

Communication apparatuses mentioned in embodiments of this application, for example, the first communication apparatus and a second communication apparatus, may be network devices such as switches or routers, or may be some components on the network device, for example, boards or line cards on the network device, or may be some function modules on the network device, or may be chips configured to implement the method in this application. This is not specifically limited in embodiments of this application. The communication apparatuses may be directly connected, for example, but not limited to, by using an Ethernet cable or an optical cable.

In an example, the method 100 shown in FIG. 1 may include, for example, S101 to S103.

For an outer code block and an inner code block in the method 100, refer to the foregoing descriptions of the outer code block and the inner code block. Details are not described herein again.

S101: Obtain a first fgBU, where the first fgBU includes a plurality of first outer code blocks, the plurality of first outer code blocks include an outer S code block, a plurality of outer D code blocks, and a first outer E code block, and the first outer E code block is used to carry data of a first inner code block.

In an example, the first communication apparatus may first obtain a code block stream including a plurality of outer code blocks, and then analyze the code block stream to obtain the first fgBU.

In an example, if S101 is performed by an inbound interface of the first communication apparatus, during specific implementation of "obtaining a code block stream including a plurality of outer code blocks", for example, the inbound interface may receive the code block stream that includes the plurality of outer code blocks and that is sent by an upstream node (for example, a PE1 node).

In another example, if S101 is performed by an outbound interface of the first communication apparatus, during specific implementation of "obtaining a code block stream including a plurality of outer code blocks", for example, the outbound interface may obtain the code block stream based on data transmitted by the inbound interface of the first communication apparatus to the outbound interface.

In an example, during specific implementation of obtaining a first fgBU based on the code block stream, for example, a first outer E code block in the code block stream may be first identified, and then an fgBU to which the first outer E code block belongs is further determined, to determine the first fgBU.

During specific implementation of identifying the first outer E code block in the code block stream, for example, an E code block may be matched against the code block stream, to determine the first outer E code block in the code block stream.

During specific implementation of determining the fgBU to which the first outer E code block belongs, for example, a FlexE overhead in the code block stream may be first identified to locate a FlexE frame in the code block stream, an MTNP data stream is restored from each slot of the FlexE frame based on a fine-grained slot configuration, and at least one fgBU is restored based on the MTNP data stream; and then, the fgBU corresponding to the first outer E code block is determined as the first fgBU.

In another example, during specific implementation of obtaining the first fgBU based on the code block stream, for example, at least one fgBU may be first obtained based on the code block stream, and then the at least one fgBU is analyzed separately to determine whether each fgBU includes an E code block, to obtain the first fgBU including the first outer E code block.

If both a D code block and a T code block included in a code block stream change into E code blocks because an error occurs in a transmission process of the code block stream, the first outer E code block may be a first outer D code block in which an error occurs, or may be a first outer T code block in which an error occurs.

It can be learned from the foregoing descriptions of the inner code block that the inner code block may include an S code block, a D code block, and a T code block, and may further include an idle I code block and/or an O code block. Therefore, the first inner code block may be any one of an S code block, a D code block, a T code block, an idle I code block, and an O code block.

S102: Restore the first inner code block based on the first fgBU.

A specific implementation of restoring the first inner code block based on the first fgBU is an inverse process of filling the first inner code block into a data payload field of an outer code block. In an example, during specific implementation of S102, a data payload part in the first fgBU may be extracted, and after the data payload part is concatenated, a corresponding inner 66B code block is restored. After the inner 66B code block corresponding to the first fgBU is obtained, the inner 66B code block corresponding to the first outer E code block may be determined as the first inner code block.

The first outer E code block and the first inner code block are described by using an example with reference to FIG. 1d. In an example, the first outer E code block may be the 1^{st} outer 66B code block shown in FIG. 1d, and the first inner code block may be the 1^{st} inner 66B code block shown in FIG. 1d. In another example, the first outer code block may be the 2^{nd} outer 66B code block shown in FIG. 1d, and the first inner code block may be the 1^{st} inner 66B code block or the 2^{nd} inner 66B code block shown in FIG. 1d.

In an example, the first inner code block may be carried in a first sub-slot. The first sub-slot may be used to carry data corresponding to a sub-client, data carried in the first sub-slot may include a plurality of inner code blocks, and the first inner code block may be one of the plurality of inner code blocks.

S 102 may be performed by the inbound interface of the first communication apparatus, or may be performed by the outbound interface of the first communication apparatus.

S103: Set the first inner code block as a first inner E code block.

In an example, to avoid bit error spreading caused by the first outer E code block, after the first inner code block is restored, the first inner code block may be set as the first inner E code block.

In an example, S103 may be performed by the inbound interface of the first communication apparatus, or may be performed by the outbound interface of the first communication apparatus.

In some embodiments, if S102 is performed by the inbound interface of the first communication apparatus, and S103 is performed by the outbound interface of the first communication apparatus, in an example, after restoring the first inner code block, the inbound interface may add a tag to the first inner code block. Correspondingly, the outbound interface sets the first inner code block as the first inner E code block based on the tag.

As described above, the first inner code block may correspond to a first sub-slot, and the first sub-slot may correspond to a plurality of inner code blocks. In this case, if an error occurs in the first inner code block, an error also occurs in data carried in the first sub-slot. In this case, in an example, during specific implementation of S103, the plurality of inner code blocks corresponding to the first sub-slot may be all set as inner E code blocks. Certainly, in another example, the first inner code block may be set as the first inner E code block, and an inner code block other than the first inner code block in the plurality of inner code blocks corresponding to the first sub-slot may not be processed. In still another example, some code blocks in the plurality of inner code blocks corresponding to the first sub-slot may be set as inner E code blocks, and the some code blocks may include the first inner code block. For example, the first inner code block and several inner code blocks adjacent to the first inner code block in the plurality of inner code blocks corresponding to the first sub-slot may be set as inner E code blocks.

As described above, the first communication apparatus may be a fine-grained service switching node. In this case, in an example, after setting the first inner code block as the first inner E code block, the first communication apparatus may send the first inner E code block to a second communication apparatus. In an example, the first communication apparatus may send the code block stream including the first inner E code block to the second communication apparatus. The code block stream including the first inner E code block may be a code block stream obtained after secondary encoding. For secondary encoding, refer to the foregoing related description part. Details are not described herein again.

As described above, the first communication apparatus may be a fine-grained service sink node. In this case, in an example, after setting the first inner code block as the first inner E code block, the first communication apparatus may send the first inner E code block to an Ethernet frame client signal restoration module of the first communication apparatus. In an example, the first communication apparatus may send, for example, a multiplexing structure including the first inner E code block to the Ethernet frame client signal restoration module, so that the Ethernet frame client signal restoration module performs data restoration on the received multiplexing structure to obtain data corresponding to each client (sub-client), that is, obtain an Ethernet frame corresponding to each client. Because the first inner code block is set as the first inner E code block, when restoring the Ethernet frame based on the received multiplexing structure, the Ethernet frame client signal restoration module may discard the first inner E code block, instead of processing the first inner E code block as a normal code block. Therefore, bit error spreading can be avoided. For a process of restoring the Ethernet frame client signal by the Ethernet frame client signal restoration module based on the multiplexing structure, refer to related inner layers in IEEE 802.3. Details are not described herein.

As described above, one outer code block may correspond to one or two inner code blocks. Therefore, in an example, the first outer E code block may further carry a second inner code block in addition to the first inner code block. For example, in the scenario shown in FIG. 1d, if the first outer code block E is the 2^{nd} outer code block, the first outer code block E may correspond to the 1^{st} inner code block and the 2^{nd} inner code block. In this case, in addition to the foregoing method 100, the first communication apparatus may further perform steps A1 and A2.

Step A1: Restore the second inner code block based on the first fgBU.

Step A2: Set the second inner code block as a second inner E code block.

Performing steps A1 and A2 can avoid bit error spreading caused because the second inner code block is not set as an E code block.

For specific implementation of steps A1 and A2, refer to specific implementation parts of S102 and S103 in the method 100. Details are not described herein again.

In an example, if the first communication apparatus is the fine-grained service switching node, after performing A1 and A2, the first communication apparatus may further send the second inner E code block to the second communication apparatus in addition to sending the first inner code block to the second communication apparatus. In an example, the first communication apparatus may send the code block stream including the first inner E code block and the second inner E code block to the second communication apparatus. The code block stream including the first inner E code block and the second inner E code block may be a code block stream obtained after secondary encoding. For secondary encoding, refer to the foregoing related description part. Details are not described herein again.

In another example, if the first communication apparatus is the fine-grained service sink node, after performing A1 and A2, the first communication apparatus may further send the second inner E code block to the Ethernet frame client signal restoration module of the first communication apparatus in addition to sending the first inner code block to the Ethernet frame client signal restoration module of the first communication apparatus. In an example, the first communication apparatus may send, for example, a multiplexing structure including the first inner E code block and the second inner E code block to the Ethernet frame client signal restoration module, so that the Ethernet frame client signal restoration module performs data restoration on the received multiplexing structure to obtain data corresponding to each sub-client.

In an example, the plurality of first outer code blocks included in the first fgBU may further include a second outer E code block in addition to the first outer E code block. The second outer E code block may be a second outer D code block in which an error occurs, and the second outer E code block is used to carry data of a third inner code block. In this case, the first communication apparatus may further perform steps B1 and B2.

Step B1: Restore the third inner code block based on the first fgBU.

Step B2: Set the third inner code block as a third inner E code block.

Performing steps B1 and B2 can avoid bit error spreading caused because the third inner code block is not set as an E code block.

For specific implementation of steps B1 and B2, refer to specific implementation parts of S102 and S103 in the method 100. Details are not described herein again.

In an example, if the first communication apparatus is the fine-grained service switching node, after performing B1 and B2, the first communication apparatus may further send the third inner E code block to the second communication apparatus in addition to sending the first inner code block to the second communication apparatus. In an example, the first communication apparatus may send the code block stream including the first inner E code block and the third inner E code block to the second communication apparatus. The code block stream including the first inner E code block and the third inner E code block may be a code block stream obtained after secondary encoding. For secondary encoding, refer to the foregoing related description part. Details are not described herein again.

In another example, if the first communication apparatus is the fine-grained service sink node, after performing B1 and B2, the first communication apparatus may further send the third inner E code block to the Ethernet frame client signal restoration module of the first communication apparatus in addition to sending the first inner code block to the Ethernet frame client signal restoration module of the first communication apparatus. In an example, the first communication apparatus may send, for example, a multiplexing structure including the first inner E code block and the third inner E code block to the Ethernet frame client signal restoration module, so that the Ethernet frame client signal restoration module performs data restoration on the received multiplexing structure to obtain data corresponding to each sub-client.

In an example, in addition to the first fgBU, another fgBU may also include an outer E code block (for example, the first outer E code block and the second outer E code block). In this case, the first communication apparatus may further perform steps C1 to C3.

Step C1: Obtain a second fgBU, where the second fgBU includes a plurality of second outer code blocks, the plurality of second outer code blocks include an outer S code block, a plurality of outer D code blocks, and a fourth outer E code block, and the fourth outer E code block is used to carry data of a fourth inner code block.

Step C2: Restore the fourth inner code block based on the second fgBU.

Step C3: Set the fourth inner code block as a fourth inner E code block.

For specific implementation of steps C1 to C3, refer to the foregoing specific description parts of the method 100. Details are not described herein again.

In an example, if the first communication apparatus is the fine-grained service switching node, after performing steps C1 to C3, the first communication apparatus may further send the fourth inner E code block to the second communication apparatus.

In an example, if the first communication apparatus is the fine-grained service sink node, after performing C1 to C3, the first communication apparatus may further send the fourth inner E code block to the Ethernet frame client signal restoration module of the first communication apparatus.

An embodiment of this application further provides an error code block processing apparatus. The apparatus may be used in a first communication apparatus using a FlexE fine granularity technology. The error code block processing apparatus may include a transceiver unit and a processing unit. The transceiver unit is configured to perform a receiving-related operation and/or a sending-related operation performed by the first communication apparatus in the possible implementations of the foregoing method embodiments. The processing unit is configured to perform an operation other than the receiving-related operation and/or the sending-related operation performed by the first communication apparatus in the possible implementations of the foregoing method embodiments. In specific implementation, the transceiver unit may include a receiving unit and/or a sending unit. The receiving unit is configured to perform the receiving-related operation, and the sending unit is configured to perform the sending-related operation.

In a specific example, FIG. 3 is a diagram of a structure of an error code block processing apparatus according to an embodiment of this application. As shown in FIG. 3, the error code block processing apparatus 300 may include a receiving unit 301 and a processing unit 302.

The receiving unit 301 is configured to obtain a first fine granularity basic unit fgBU, where the first fgBU includes a plurality of first outer code blocks, the plurality of first outer code blocks include an outer start S code block, a plurality of outer data D code blocks, and a first outer error E code block, and the first outer E code block is used to carry data of a first inner code block. The processing unit 302 is configured to: restore the first inner code block based on the first fgBU; and set the first inner code block as a first inner E code block.

In a possible implementation, the first inner code block corresponds to a first sub-slot, and the setting the first inner code block as a first inner E code block includes: setting a plurality of inner code blocks corresponding to the first sub-slot as inner E code blocks, where the plurality of inner code blocks include the first inner code block.

In a possible implementation, the plurality of first outer code blocks further include a termination T code block, and the first outer E code block is a first outer D code block in which an error occurs.

In a possible implementation, the first outer E code block is a T code block in which an error occurs.

In a possible implementation, the first communication apparatus is a fine-grained service switching node, and the apparatus further includes: a sending unit, configured to send the first inner E code block to a second communication apparatus.

In a possible implementation, the first communication apparatus is a fine-grained service sink node, and the apparatus further includes: a sending unit, configured to send the first inner E code block to an Ethernet frame client signal restoration module of the first communication apparatus.

In a possible implementation, the first outer E code block is further used to carry data of a second inner code block, and the processing unit 302 is further configured to: restore the second inner code block based on the first fgBU, and set the second inner code block as a second inner E code block.

In a possible implementation, the first communication apparatus is the fine-grained service switching node, and the sending unit included in the apparatus is further configured to send the second inner E code block to the second communication apparatus.

In a possible implementation, the first communication apparatus is the fine-grained service sink node, and the sending unit included in the apparatus is further configured to send the second inner E code block to the Ethernet frame client signal restoration module of the first communication apparatus.

In a possible implementation, the plurality of first outer code blocks further include a second outer E code block, the second outer E code block is a second outer D code block in which an error occurs, and the second outer E code block is used to carry data of a third inner code block. The processing unit is further configured to: restore the third inner code block based on the first fgBU, and set the third inner code block as a third inner E code block

In a possible implementation, the receiving unit 301 is further configured to obtain a second fgBU, where the second fgBU includes a plurality of second outer code blocks, the plurality of second outer code blocks include an outer S code block, a plurality of outer D code blocks, and a fourth outer E code block, and the fourth outer E code block is used to carry data of a fourth inner code block. The processing unit is further configured to: restore the fourth inner code block based on the second fgBU, and set the fourth inner code block to a fourth inner E code block.

In a possible implementation, the first inner code block includes any one of the following types of code blocks: an S code block, a D code block, a T code block, an idle I code block, or an O code block.

In a possible implementation, the first communication apparatus is the fine-grained service switching node, and the setting the first inner code block as a first inner E code block includes: An outbound interface of the first communication apparatus sets the first inner code block as the first inner E code block.

The apparatus 300 is an apparatus corresponding to the method performed by the first communication apparatus provided in the foregoing method embodiment, and specific implementation of each unit of the apparatus 300 has a same concept as the foregoing method embodiment. Therefore, for specific implementation of each unit of the apparatus 300, refer to the descriptions in the foregoing method embodiment. Details are not described herein again.

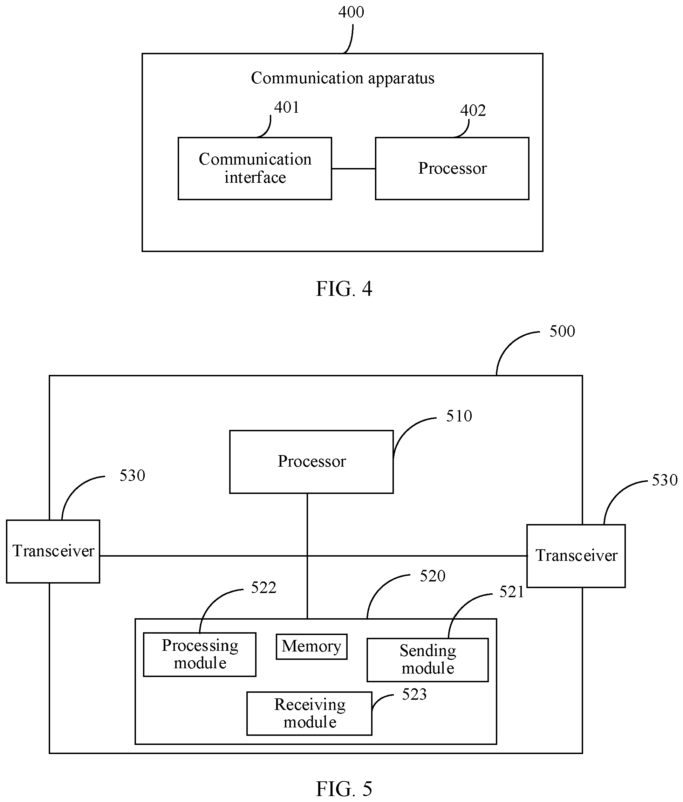

In addition, an embodiment of this application further provides a communication apparatus 400. FIG. 4 is a diagram of a structure of a communication apparatus according to an embodiment of this application. The communication apparatus 400 includes a communication interface 401 and a processor 402 connected to the communication interface 401. The communication apparatus 400 may be configured to perform the method 10 in the foregoing embodiment.

In an example, the communication apparatus 400 may perform the method 100 in the foregoing embodiment. When the communication apparatus 400 is configured to perform the method 100 in the foregoing embodiment, the communication apparatus 400 is equivalent to the first communication apparatus in the method 100. The communication interface 401 is configured to perform a receiving/sending operation performed by the first communication apparatus in the method 100. The processor 402 is configured to perform an operation other than the receiving/sending operation performed by the first communication apparatus in the method 100. For example, the communication interface 401 is configured to obtain a first fgBU, where the first fgBU includes a plurality of first outer code blocks, the plurality of first outer code blocks include an outer S code block, a plurality of outer D code blocks, and a first outer E code block, and the first outer E code block is used to carry data of a first inner code block. The processor 402 is configured to: restore the first inner code block based on the first fgBU; and set the first inner code block as a first inner E code block.

In addition, an embodiment of this application further provides a communication apparatus 500. FIG. 5 is a diagram of a structure of a communication apparatus according to an embodiment of this application. The communication apparatus 500 may be configured to perform the method 100 in the foregoing embodiment.

As shown in FIG. 5, the communication apparatus 500 may include a processor 510, a memory 520 coupled to the processor 510, and a transceiver 530. The transceiver 530 may be, for example, a communication interface or an optical module. The processor 510 may be a central processing unit (central processing unit, CPU), a network processor (network processor, NP), or a combination of the CPU and the NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. There may be one or more processors 510. The memory 520 may include a volatile memory (English: volatile memory), for example, a random-access memory (English: random-access memory, RAM for short). The memory may alternatively include a non-volatile memory (English: non-volatile memory), for example, a read-only memory (read-only memory, ROM), a flash memory (English: flash memory), a hard disk drive (hard disk drive, HDD), or a solid-state drive (solid-state drive, SSD). The memory 520 may alternatively include a combination of the foregoing types of memories. There may be one or more memories 520. In an implementation, the memory 520 stores computer-readable instructions, and the computer-readable instructions include a plurality of software modules, for example, a sending module 521, a processing module 522, and a receiving module 523. After executing each software module, the processor 510 may perform a corresponding operation according to an indication of each software module. In this embodiment, an operation performed by a software module is actually an operation performed by the processor 510 according to an indication of the software module.

In an example, the communication apparatus 500 may perform the method 100 in the foregoing embodiment. When the communication apparatus 500 is configured to perform the method 100 in the foregoing embodiment, the communication apparatus 500 is equivalent to the first communication apparatus in the method 100. The transceiver 530 is configured to perform a receiving/sending operation performed by the first communication apparatus in the method 100. The processor 510 is configured to perform an operation other than the receiving/sending operation performed by the first communication apparatus in the method 100. For example, the transceiver 530 is configured to obtain a first fgBU, where the first fgBU includes a plurality of first outer code blocks, the plurality of first outer code blocks include an outer S code block, a plurality of outer D code blocks, and a first outer E code block, and the first outer E code block is used to carry data of a first inner code block. The processor 510 is configured to: restore the first inner code block based on the first fgBU; and set the first inner code block as a first inner E code block.

This application further provides a computer-readable storage medium. The computer-readable storage medium stores instructions. When the instructions are run on a computer, the computer is enabled to perform any one or more operations in the method (for example, the method 100) in the foregoing embodiment.

This application further provides a computer program product, including a computer program. When the computer program is run on a computer, the computer is enabled to perform any one or more operations in the method (for example, the method 100) in the foregoing embodiment.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An error code block processing method, applied to a first communication apparatus using a flexible Ethernet FlexE fine granularity technology, wherein the method comprises:
obtaining a first fine granularity basic unit fgBU, wherein the first fgBU comprises a plurality of first outer code blocks, the plurality of first outer code blocks comprise an outer start S code block, a plurality of outer data D code blocks, and a first outer error E code block, and the first outer E code block is used to carry data of a first inner code block;
restoring the first inner code block based on the first fgBU; and
setting the first inner code block as a first inner E code block.

2. The method according to claim 1, wherein the first inner code block corresponds to a first sub-slot, and the setting the first inner code block as a first inner E code block comprises:
setting a plurality of inner code blocks corresponding to the first sub-slot as inner E code blocks, wherein the plurality of inner code blocks comprise the first inner code block.

3. The method according to claim 1 or 2, wherein the plurality of first outer code blocks further comprise a termination T code block, and the first outer E code block is a first outer D code block in which an error occurs.

4. The method according to claim 1 or 2, wherein the first outer E code block is a T code block in which an error occurs.

5. The method according to any one of claims 1 to 4, wherein the first communication apparatus is a fine-grained service switching node, and the method further comprises:
sending the first inner E code block to a second communication apparatus.

6. The method according to any one of claims 1 to 4, wherein the first communication apparatus is a fine-grained service sink node, and the method further comprises:
sending the first inner E code block to an Ethernet frame client signal restoration module of the first communication apparatus.

7. The method according to any one of claims 1 to 6, wherein the first outer E code block is further used to carry data of a second inner code block, and the method further comprises:
restoring the second inner code block based on the first fgBU, and setting the second inner code block as a second inner E code block.

8. The method according to claim 7, wherein the first communication apparatus is the fine-grained service switching node, and the method further comprises:
sending the second inner E code block to the second communication apparatus.

9. The method according to claim 7, wherein the first communication apparatus is the fine-grained service sink node, and the method further comprises:
sending the second inner E code block to the Ethernet frame client signal restoration module of the first communication apparatus.

10. The method according to any one of claims 1 to 9, wherein the plurality of first outer code blocks further comprise a second outer E code block, the second outer E code block is a second outer D code block in which an error occurs, and the second outer E code block is used to carry data of a third inner code block; and the method further comprises:
restoring the third inner code block based on the first fgBU, and setting the third inner code block as a third inner E code block.

11. The method according to any one of claims 1 to 10, wherein the method further comprises:
obtaining a second fgBU, wherein the second fgBU comprises a plurality of second outer code blocks, the plurality of second outer code blocks comprise an outer S code block, a plurality of outer D code blocks, and a fourth outer E code block, and the fourth outer E code block is used to carry data of a fourth inner code block; and
restoring the fourth inner code block based on the second fgBU, and setting the fourth inner code block as a fourth inner E code block.

12. The method according to any one of claims 1 to 11, wherein the first inner code block comprises any one of the following types of code blocks:
an S code block, a D code block, a T code block, an idle I code block, or an O code block.

13. The method according to any one of claims 1 to 5, wherein the first communication apparatus is the fine-grained service switching node, and the setting the first inner code block as a first inner E code block comprises:
setting, by an outbound interface of the first communication apparatus, the first inner code block as the first inner E code block.

14. An error code block processing apparatus, used in a first communication apparatus using a flexible Ethernet FlexE fine-grained technology, wherein the apparatus comprises:
a transceiver unit and a processing unit, wherein
the transceiver unit is configured to perform a receiving operation and/or a sending operation performed by the first communication apparatus according to any one of claims 1 to 13; and
the processing unit is configured to perform an operation other than the receiving operation and/or the sending operation performed by the first communication apparatus according to any one of claims 1 to 13.

15. A communication apparatus, comprising a processor and a memory, wherein
the memory is configured to store instructions; and
the processor is configured to execute the instructions, so that the communication apparatus performs the method according to any one of claims 1 to 13.

16. A computer-readable storage medium, comprising instructions, wherein when the instructions are run on a processor, the method according to any one of claims 1 to 13 is implemented.

17. A computer program product, comprising a computer program, wherein when the computer program is run on a processor, the method according to any one of claims 1 to 13 is implemented.
